# EUROPEAN PATENT APPLICATION

(11) **EP 4 317 089 A1**
(43) Date of publication of application: **07.02.2024**
(21) Application number: 23189377.7
(22) Date of filing: 03.08.2023
(51) Int. Cl.: C02F 3/34, C02F 11/00, C02F 11/02, C02F 103/20, C05F 3/00

(54) **TREATMENT OF ANIMAL WASTE**

(30) Priority: 03.08.2022 GB 202211333
(71) Applicant: Pruex Limited, Llanelli SA14 7HU (GB)
(72) Inventor: DAVIES, Aled Rhys, Carmarthenshire (GB)
(74) Representative: Dehns

(57) **Abstract**

A method of treatment of animal waste is disclosed. The method comprises periodically or continuously applying a treatment composition to the animal waste in the location that the animal waste is produced, in which the treatment composition comprises a probiotic, and the probiotic comprises at least one non-pathogenic species of Bacteria.

## Description

This invention relates to the treatment of animal waste, and in particular to a method of treatment that produces a useful end product.

It is known that animal waste, and in particular animal waste generated in medium or high density animal husbandry, can be polluting and / or toxic to the environment, the animals producing the waste and humans working with those animals.

The polluting nature of such waste includes nutrient pollution if the waste is improperly stored or introduced in the environment, for example by spreading the waste on the land. Nutrient pollution is, in general terms, caused by excess nitrogen and phosphorus in water systems such as ground water, streams, rivers and the sea. The excess nitrogen and phosphorus can either enter the water system directly, for example through a failure of a storage facility or a flooding event, or by leaching out of the soil to which the waste has been applied. That excess of nitrogen and phosphorus in the water causes algae to grow faster than ecosystems can handle. This leads to significant increases in algae which causes harm to water quality, food resources and habitats, by decreasing or removing dissolved oxygen from the water. This can mean that fish and other aquatic life are killed because there is not sufficient oxygen in the water for them to survive. Furthermore, large growths of algae (often referred to as algal blooms) can be harmful to humans because they produce elevated toxins and bacterial growth that can make people sick if they come into direct contact with or ingest that polluted water, or encounter it indirectly, for example by the consumption of plant or animal life from that polluted water.

Excess nitrogen originating from animal waste can also produce airborne pollutants such as ammonia and ozone. These gasses can impair human and animal ability to breathe and limit visibility. They can also adversely affect plant growth.

The animal waste can also prove toxic in that such waste can be host to pathogenic bacteria and microorganisms such as *escherichia coli*, salmonella, *staphylococcus aureus*, *candida albicans* and *pseudomonas aeruginosa.* Such microorganisms can, if for example spread on a field, transfer to humans, animals or plants and lead to sickness and, in extreme cases death.

According to a first aspect of the present invention there is provided a method of treatment of animal waste, in which the method comprises periodically or continuously applying a treatment composition to the animal waste in the location that the animal waste is produced, in which the treatment composition comprises a probiotic, and the probiotic comprises at least one non-pathogenic species of Bacteria. The treatment may be performed whilst the animals are in the location that the animal waste is produced or whilst the animals are elsewhere.

The location that the animal waste is produced is where that animal waste is deposited by the animal. The method of the present invention is performed with the animals in that location. An advantage of the method of the present invention is that the animal waste is treated, with all the benefits of that treatment as described below, without disturbing or having to move the animals, or having to handle or move the animal waste in its untreated form.

For the purposes of the description of the present invention it is to be understood that animal waste references a material which is animal faeces or urine, a mixture containing both faeces and urine, or a mixture of faeces, urine and at least one other material. As will be described further below, the method of the present invention changes the nature of the material relative to the time at which treatment of the material commences but, for clarity, the material will be generally described as animal waste or, if appropriate in context, untreated animal waste, partially treated animal waste, and treated animal waste irrespective of the properties of the material at the time that the material is being referenced.

In an embodiment of the above embodiment, the bacteria are in the form of bacterial spores or endospores.

In some embodiments, all or substantially all of the bacteria are in the from of spores at the time of treatment. In some other embodiments some of the bacteria are spores and some have the form of vegetative cells. In some embodiments at least 50%, at least 60%, at least 70%, at least 80%, at least 90%, or 100% of the at least one non-pathogenic species of Bacteria are in the form of spores.

In an embodiment of any of the above embodiments, the bacterial spoors germinate after application of the treatment composition to the animal waste.

In an embodiment of the above embodiment, the method further comprises provision of at least one source of drinking water for the animals, introducing a drinking treatment composition into the drinking water for the animals, and the drinking treatment composition comprises a probiotic, and the probiotic comprises at least one non-pathogenic species of Bacteria. This is advantageous because the water source for the animals includes as a result, no or a minimal level of pathogenic Bacteria. This improves the health of the animals because they will not ingest such pathogenic Bacteria.

In an embodiment of any of the above embodiments, the treatment composition and the drinking treatment composition are the same.

In an embodiment of any of the above embodiments, the treatment composition and the drinking treatment composition have different formulations.

In an embodiment of any of the above embodiments, the at least one non-pathogenic species of Bacteria of the treatment composition comprises at least one non-pathogenic species of the genus *Bacillus.*

In an embodiment of any of the above embodiments, the at least one non-pathogenic species of Bacteria of the drinking treatment composition comprises at least one non-pathogenic species of the genus *Bacillus.*

In an embodiment of any of the above embodiments, the treatment composition is a liquid.

In an embodiment of any of the above embodiments, the drinking treatment composition is a liquid.

In an embodiment of any of the above embodiments, the liquid treatment composition is of a low enough viscosity that it is sprayable.

In an embodiment of any of the above embodiments, the liquid treatment composition is of a low enough viscosity that it is sprayable with an average droplet size of less than 1000 µm, less than 500 µm, or less than 300 µm.

It is to be understood that "average" is the mean average unless otherwise stated.

In an embodiment of any of the above embodiments, the application of the treatment composition to the animal waste is by spraying the animal waste with the treatment composition.

In an embodiment of any of the above embodiments, the treatment composition is formed into a mist, and the mist allowed to settle onto the animal waste. In some embodiments the mist has an average droplet size of less than 1000 µm, less than 500 µm, or less than 300 µm.

In an embodiment of the above embodiment the animal waste is generated by poultry, for example but not limited to chickens, turkeys, ducks and geese. Intensive or high density farming of poultry typically involves holding the poultry in relatively small, typically enclosed, areas such as sheds for at least part of the time or all the time. This can be whilst the poultry grow to reach a size where they are ready for consumption, or whilst they lay eggs. The holding of the poultry in the sheds leads to the generation of animal waste which is principally composed of faeces and urine. There may be some bedding and / or uneaten food mixed with the animal waste.

The living conditions and life cycles of poultry raised for consumption and poultry kept for egg production are typically different from each other.

With regard to poultry raised for consumption under intensive conditions, for example chickens, the poultry are typically introduced into to a shed when they are a small number of days old, for example one day old. The poultry then live in that shed until they have grown to the desired size, typically at about 36 days old for chickens, or until they are thinned out to allow the remaining poultry sufficient space to grow to their full desired size.

Typically, during the period from the introduction of the poultry to the shed until all of the poultry are removed from the shed no cleaning of the inside of the shed occurs. As a result the animal waste produced by the poultry builds up on the floor of the shed as time progresses. The animal waste is not produced and thus does not buildup at an even rate. Rather, the rate of production and buildup of animal waste increases as time progresses and the poultry grow larger.

Typically, whilst the animal waste is sitting on the floor of the shed the animal waste is host to pathogenic and anerobic Bacteria. Those Bacteria feed on the animal waste and lead to the generation of greenhouse gasses such as methane and ammonia with the result that the atmosphere within the shed can contain unhealthy high concentrations of, in particular, atmospheric ammonia. This leads to ill health in the poultry and humans who work with the poultry . If the poultry are not healthy, which is undesirable in itself, there is also a reduced growth rate, an increase in mortality, and a reduction in the quality of the poultry when it is consumed.

The timings mentioned above relate to chickens, the same general principles apply for other poultry types that are being reared for consumption although the timing may be different and it may be the case that for some or all the daylight hours the poultry may have access to space outside the shed. The benefits of the present invention apply equally to animal housing that is only occupied for a part of the time but which are not cleaned on a daily basis.

With regard to poultry being kept for laying eggs under intensive conditions, for example chickens, the poultry are typically introduced into to a shed when they are a certain age, for example around 16 weeks old for chickens, and will remain in the shed until they have stopped laying or the rate of egg production has fallen below desired level, for example around 76 weeks old for chickens. The shed is typically provided with a raised floor on which the poultry may roam and through which animal waste may fall.

In poultry housing systems known as flat deck systems the animal waste falls through the raised floor and builds up on a solid floor beneath the raised floor. That animal waste remains in that location until the poultry are removed from the shed.

In poultry housing systems known as multi tier systems one or more conveyor belts are located beneath the raised floor. Animal waste falling through the raised floor falls on the conveyer belt or one of the conveyer belts. The or each conveyor belt typically extends between two opposing walls of the shed and one end of the or each conveyer belt passes through the shed wall. Periodically the or each conveyor belt is caused to move so that it transports the animal waste that has landed on the conveyor belt through the wall and discharges that animal waste onto the floor outside the shed or into a container.

Typically, whilst the animal waste is sitting on the floor or on the conveyer belt beneath the raised floor the animal waste is host to pathogenic bacteria and those Bacteria lead to the generation of greenhouse gasses such as methane and ammonia with the result that the atmosphere within the shed can contain unhealthy high concentrations of, in particular, atmospheric ammonia. This leads to ill health in the poultry and humans who work with the poultry . If the poultry are not healthy, which is undesirable in itself for welfare reasons, there is also a reduction in the egg production rate, an increase in poultry mortality, a reduction in the fertility and health of eggs laid for breeding, and a reduction in the size and quality of the eggs produced if the eggs are for consumption.

In an embodiment of the above embodiment the animal waste is generated by cattle, sheep, or ponies / horses (hereafter simply referenced as "horses") and is a mixture of faeces, urine, and a bedding material. The bedding material may be, but is not limited to, straw, woodchip, and sand. Such animal waste is commonly known as bedding whilst it is in the location of the production of the animal waste, and farmyard manure (when it originates from cattle or sheep) or horse manure (when it originates from horses) once the bedding has been removed from the location of production of the animal waste.

Typically, whilst the bedding / animal waste is sitting in the place of production of that animal waste the animal waste is host to pathogenic and anerobic Bacteria.

Those Bacteria feed on the animal waste and lead to the generation of greenhouse gasses such as methane and ammonia with the result that the atmosphere in the region of production of the animal waste can contain unhealthy high concentrations of, in particular, atmospheric ammonia. This leads to ill health in the cattle or sheep and humans who work with them.

With regard to horses, although horse bedding, or at lest the faeces therein is typically cleared out of the horse's accommodation, for example a stable, on a daily basis, the periodic application of the treatment composition in the method of the present invention helps minimize or eliminate pathogenic Bacteria from that accommodation.

In other embodiments of any of the above embodiments the animal waste is generated by other species of animals in agricultural, domestic, zoological or other animal husbandry situations. That animal waste typically has the same bacterial makeup and treatment of that animal waste according to the present invention has the same advantages as outlined above and below.

A known technique for disposing of the animal waste is to store that animal waste until it can be spread on agricultural or horticultural land so that the soil ecosystem can subsequently treat it. This can lead to the problems discussed above. Whilst the animal waste is being stored the conditions within the animal waste are generally anaerobic and can lead to the flourishing of pathogenic bacteria and the generation of greenhouse gasses such as methane and ammonia.

The animal waste contains organic nitrogen (N) in compounds that are not plant available. When exposed to Bacteria and / or other micro-organisms that organic N, as part of the lifecycle of the Bacteria and / or other micro-organisms is converted into various possible inorganic forms of N. Some of those inorganic forms of N are desirable and some not so. The particular forms into which the organic Ni is converted are dependent on the type of Bacteria and / or other micro-organisms performing the conversion.

The Bacteria and / or other micro-organisms of the treatment composition act on the organic N and convert it to inorganic N through the mineralization process. In this process, bacteria digest organic material and release NH₄⁺-N (ammonium-N).

Formation of NH₄⁺-N increases as Bacterial and / or microbial activity increases. The NH₄⁺-N resultant from the mineralization process is the same as the NH₄⁺-N supplied in commercial fertilizers.

Plants can absorb NH₄⁺-N. Also, because the NH₄⁺ has a positive charge, it's attracted or held by negatively charged soil and soil organic matter. This means that the NH₄⁺-N doesn't move downward in soils, and thus does not leach out of the soil.

Nitrogen in the NH₄⁺-N form that isn't taken up by plants may be subject to further conversion by bacterial / microbiological action such as nitrification which is the conversion of NH₄⁺ (ammonium) to NO₂⁻ (nitrite) and then to NO₃⁻ (nitrate). Each of ammonium, nitrite, and nitrate are plant available. Nitrate is the most plant available but also the most easily leached out of the soil.

The high level of Bacteria and / or other micro-organisms from the treatment composition also has the effect of minimizing the amount of other Bacteria in the animal waste as a result of competitive exclusion and quorum sensing amongst the Bacteria. Those other Bacteria include denitrifying Bacteria which use NO₃⁻-N instead of oxygen in their metabolic processes. In denitrification, Bacteria convert N0₃⁻-N to N gases such As NH₃ (ammonia) that are lost to the atmosphere. The NO₃⁻-N is formed as part of the conversion of urea to NH₄⁺-N.

In addition to the conversion of organic N to inorganic N, the growth of the Bacteria of the treatment composition in the animal waste has the effect that at the end of the method of treatment of the animal waste the fully treated animal waste contains high levels of Bacteria. Those Bacteria are a food source in the soil food chain. This assists in maintaining a healthy soil ecosystem.

With regard to phosphorus, animal waste contains organic phosphorus (P) in compounds or in organic form that are not plant available. When exposed to Bacteria and / or other micro-organisms that organic phosphorus, as part of the lifecycle of the Bacteria and / or other micro-organisms is converted into the inorganic form of phosphorus that is known as plant available or soil solution phosphorus. In particular, the Bacteria use phosphorus in the synthesis of Adenosine triphosphate (ATP) from adenosine diphosphate (ADP) during metabolic processes within the Bacteria.

When untreated animal waste is to be spread on the land, there is often a legal and practical maximum quantity of animal waste that can be spread per unit area of land. The practical maximum is the quantity that does not simply kill off the plant and soil ecosystem that is intended to treat the animal waste and convert it into a less polluting / toxic material than the animal waste . The legal maximum may be set by the appropriate authority that oversees the land on which the animal waste is to be spread. These maximums can result in the party who is trying to dispose of the animal waste, for example a farmer, needing a significant area of land for spreading the animal waste on.

The animal waste may be composted. It is known that composting the liquid animal waste is time consuming and can lead to the generation of high quantities of pathogenic Bacteria and fungi within the composting material. If that composting occurs near animals the health of those animals can be adversely affected. This can require the use of antibiotics to restore their health. This is generally undesirable.

It has been found that the treatment of the animal waste by the method of the present invention causes the competitive exclusion of pathogenic bacteria and microorganisms in the animal waste by the at least one non-pathogenic species of the genus *Bacillus* that is applied to the animal waste. This is advantageous because it reduces the toxic load within the animal waste.

The treatment also leads to aerobic conditions within the animal waste.

As discussed above, a further advantage of the method of the present invention is that the growth of the Bacteria, in general terms, ingest and incorporate nitrogen and phosphorus into their structures. This is particularly so when the bacterial are applied as spore and they germinate once applied to the animal waste because in such circumstances the need the nitrogen and phosphorous to form the vegetative cells. That incorporated nitrogen and phosphorus is significantly more bioavailable to the soil ecosystem and plants, and is much less likely to leach out of the soil than the nitrogen and phosphorus in animal waste that has not been treated by the method of the present invention when it is applied to the soil.

A further advantage is that the Bacteria grow and multiply in the animal waste and as a result are present in the treated animal waste when treatment is complete. Those Bacteria act as a food source at the base of the soil and plant ecosystem with the result that spreading the treated waste / or fibrous material onto the soil assists in encouraging the local ecosystem to flourish by the provision of food which can lead to members of the ecosystem higher than the Bacteria flourishing and leading to improved soil quality and structure. This will increase the resistance of crops or other plants grown on the soil to pests and diseases. It will also improve the water retention characteristics of the soil. This can assist in prevention or minimization of flooding in high rainfall events.

In an embodiment of any of the above embodiments, the probiotic component of the treatment composition comprises one or more of at least one non-pathogenic species of the genus *Bacillus,* Lactic Acid Bacteria, soil Bacteria, water Bacteria, human microbiome Bacteria and plant Bacteria and / or the spores of one or more of at least one non-pathogenic species of the genus *Bacillus,* Lactic Acid Bacteria, soil Bacteria, water Bacteria, human microbiome Bacteria and plant Bacteria. The use of spoors is advantageous because they are stable and have a sufficiently long shelf life of at least two years for a product containing such spoors to be commercially viable. A further advantage is that the germination of the spoors into vegetative cells includes the absorption of nitrogen, phosphorus and water into the cellular structure which is advantageous

In an embodiment of any of the above embodiments, the probiotic component of the drinking treatment composition comprises one or more of at least one non-pathogenic species of the genus *Bacillus,* Lactic Acid Bacteria, soil Bacteria, water Bacteria, human microbiome Bacteria and plant Bacteria and / or the spores of one or more of at least one non-pathogenic species of the genus *Bacillus,* Lactic Acid Bacteria, soil Bacteria, water Bacteria, human microbiome Bacteria and plant Bacteria. The use of spoors may be advantageous because they are stable and have a sufficiently long shelf life of at least two years for a product containing such spoors to be commercially viable.

In an embodiment of any of the above embodiments, the total amount of Bacteria or spores in said probiotic component ranges from 1×10⁶ to 1×10¹⁰ cfu per gram of the composition. The unit cfu is colony-forming units.

In an embodiment of any of the above embodiments, the probiotic component of the treatment composition comprises at least one non-pathogenic species of the genus *Bacillus,* and one or more of *Lactobacillus, Lactococcus, Bifidobacterium, Azospirillum, Enterobacter, Klebsiella, Pseudomonas, Sphingomonas, Nitrospira, Pedomicrobium, Mycobacterium, Nocardia, Desulfovibrio* and Sulfuricurvum.

In an embodiment of any of the above embodiments, the probiotic component of the drinking treatment composition comprises at least one non-pathogenic species of the genus *Bacillus,* and one or more of *Lactobacillus, Lactococcus, Bifidobacterium, Azospirillum, Enterobacter, Klebsiella, Pseudomonas, Sphingomonas, Nitrospira, Pedomicrobium, Mycobacterium, Nocardia, Desulfovibrio* and Sulfuricurvum.

In an embodiment of any of the above embodiments, the at least one non-pathogenic species of the genus *Bacillus* comprises one or more of *Bacillus subtilis, Bacillus licheniformis, Bacillus megaterium, Bacillus amyloliquefaciens* and *Bacillus pumilus.*

In an embodiment of any of the above embodiments, the probiotic component of the treatment composition comprises a mixture of *Bacillus subtilis, Bacillus licheniformis, Bacillus megaterium, Bacillus amyloliquefaciens.* In some embodiments each of the *Bacillus subtilis, Bacillus licheniformis, Bacillus megaterium,* and *Bacillus amyloliquefaciens* are present in a range of between 10 wt% (dry weight) and 70 wt%(dry weight) of the *Bacillus* present in the probiotic composition. In some embodiments each of the *Bacillus subtilis, Bacillus licheniformis, Bacillus megaterium,* and *Bacillus amyloliquefaciens* are present in a range of between 20 wt% (dry weight) and 30 wt%(dry weight) of the *Bacillus* present in the probiotic composition.

In an embodiment of any of the above embodiments, the probiotic component of the drinking treatment composition comprises a mixture of *Bacillus subtilis, Bacillus licheniformis, Bacillus megaterium, Bacillus amyloliquefaciens.* In some embodiments each of the *Bacillus subtilis, Bacillus licheniformis, Bacillus megaterium,* and *Bacillus amyloliquefaciens* are present in a range of between 10 wt% (dry weight) and 70 wt%(dry weight) of the *Bacillus* present in the probiotic composition. In some embodiments each of the *Bacillus subtilis, Bacillus licheniformis, Bacillus megaterium,* and *Bacillus amyloliquefaciens* are present in a range of between 20 wt% (dry weight) and 30 wt%(dry weight) of the *Bacillus* present in the probiotic composition.

In an embodiment of any of the above embodiments, the method further comprises periodically applying a prebiotic component to the animal waste, and the prebiotic component comprises one or more prebiotic compositions. The or each prebiotic composition increases the speed of germination and /or activity of the probiotic component.

In an embodiment of any of the above embodiments, the treatment composition further comprises a prebiotic component, and the prebiotic component comprises one or more prebiotic compositions. The or each prebiotic composition increases the speed of germination and /or activity of the probiotic component.

In an embodiment of any of the above embodiments, the drinking treatment composition further comprises a prebiotic component, and the prebiotic component comprises one or more prebiotic compositions.

In an embodiment of any of the above embodiments, the one or more prebiotic compositions comprise at least one of a fructo-oligosaccharide, a galacto-oligosaccharide and/or inulin.

In an embodiment of any of the above embodiments, prebiotic composition is present in a dry weight concentration of between 100 mg and 100 g per kg of treatment composition.

In an embodiment of any of the above embodiments, the treatment composition is a solution comprising a probiotic component, a prebiotic component, and a liquid. In some embodiments the liquid is water.

An advantage of the method of the present invention is that it has been found that when the Bacteria metabolize within the animal waste they emit water vapour. This has the effect of dewatering the animal waste. Dewatering of the animal waste also occurs when the Bacteria germinate because the Bacteria need to absorb water to form a vegetative cell. As a result of the dewatering that occurs as the treatment of the animal waste progresses, the treated animal waste at the end of the treatment is substantially dryer than the untreated animal waste and may be handled and stored as dry matter. For example the treated animal waste may be placed and stored in sacks or other suitable dry matter holders and stacked for storage. In this format the treated animal waste is significantly safer than the untreated animal waste.

In an embodiment of any of the above embodiments, the method further comprises capturing at least a part of that water vapour. This is advantageous because water vapour may be classified as a greenhouse gas and as such emission of water vapour may controlled by greenhouse gas emission regulations. Capturing at least part of the water vapour will thus reduce green house gas emissions.

In an embodiment of any of the above embodiments, the capturing of the water vapour is performed by causing the water vapour to condense.

An advantage of capturing the water vapour is that because the water in the water vapour leaves the animal waste in vapour form, it is not biologically or chemically contaminated. In some embodiments the means for capturing the water vapour are so located and constructed that the captured water vapour remains uncontaminated. That captured water may be used for irrigation, watering the animals that gave rise to the animal waste, or released into the environment without further treatment. This is both ecologically and economically desirable.

In an embodiment of any of the above embodiments, the treatment composition is applied to the animal waste in the location in which it is produced by a fixed spray system.

In an embodiment of any of the above embodiments, at least one spray or mist of treatment composition is introduced into the atmosphere from the fixed spray system at a height of between 0.02 m and 2.0 m above the floor or surface on which the animals are supported.

In an embodiment of any of the above embodiments, at least one spray or mist of treatment composition is introduced into the atmosphere from the fixed spray system at a height of one of between 0.05 m and 2.0 m, between 0.05 m and 1.5 m, between 0.1 m and 1.5 m, between 0.2 m and 1.5 m, between 0.3 m and 1.5 m, between 0.4 m and 1.0 m, or 0.5 m and 1.0 m above the floor or surface on which the animals are supported.

This introduction of the spray or mist into the atmosphere from a limited distance above the floor or surface on which the animals are supported has the advantage that the mist or spray is unlikely to be significantly influenced by any air currents that are formed in the space within which the treatment method is being performed. As a result, all or nearly all of the treatment composition will fall onto the surface on which the animals, for example poultry, are roaming, the animal waste, or the animals / poultry themselves.

Such an application system is advantageous because it has been found that in addition to the treatment of the animal waste the treatment composition also acts on the whole of the environment close to the animals / poultry and on the animals / poultry. This has the effect of minimizing pathogenic bacteria and, in particular, the generation of gaseous ammonia in the environment in which the animals / poultry are at least partially living. This improves the general health of the animals / poultry and reduces the number of medical, and in particular antibiotic, treatments the animals / poultry require and / or deaths. This is beneficial for animal / poultry welfare but also in reducing antibiotic use, and saving the cost of medical treatments.

It is a further advantage of the present invention that the Bacteria in the treatment composition of the present invention are all food grade (meaning allowed for human consumption) Bacteria. They are, classified as Biosafety level 1 by the American Type Culture Collection (ATCC). Further, the Bacteria in the treatment composition of the present invention are all on the European Food Safety Authority (EFSA) Qualified Presumption of Safety (QPS) list. As a result it is recognized that exposure to, inhalation of or ingestion of these Bacteria by humans and animals is harmless to those humans and animals. Thus the method of the present invention is beneficial because there is no use of chemicals that are detrimental to the wellbeing of humans or animals and no need for the use of safety equipment. It has, in fact been found that poultry periodically exposed to the treatment composition are typically healthier, gain more weight, and produce more eggs than poultry not so exposed.

In an embodiment of any of the above embodiments, the method comprises periodically applying a treatment composition to the animal waste, and the period between each application of the treatment composition is up to 24 hours.

In an embodiment of any of the above embodiments, each period between application of the treatment composition to the animal waste is the same or approximately the same. In some embodiments the periods are one of 6 hours, 8 hours, 12 hours or 24 hours.

In an embodiment of any of the above embodiments, the length of the periods between application of the treatment composition to the animal waste are not all the same or approximately the same. In some embodiments the period between applications of treatment composition are shorter between 08:00 and 20:00 in the day that in the period between 20:00 and 08:00 the next day.

In an embodiment of any of the above embodiments, in locations which include a raised floor through which animal waste may fall, at least one spray or mist of treatment composition is introduced into the atmosphere at a position vertically below the raised floor. This helps ensure that the treatment composition makes sufficient contact with the animal waste beneath the raised floor for the treatment method to be effective.

In an embodiment of any of the above embodiments, where there are one or more conveyor belts beneath a raised floor at least one spray or mist of treatment composition is introduced into the atmosphere at a position vertically below the raised floor and above the conveyor belts. This helps ensure that the treatment composition makes sufficient contact with the animal waste on the conveyor belt for the treatment method to be effective.

In an embodiment of any of the above embodiments, the treatment is concluded when the treated animal waste meets one or more predetermined criteria.

In an embodiment of any of the above embodiments, the predetermined criteria is one or more of
- the animal waste has a dry solids content of one of at least 50% by weight (wt%), at least 60 wt%, at least 70 wt%, or at least 80 wt%,
- the mass of a predetermined volume of liquid animal waste is below a predetermined value,
- a predetermined absolute level of emission of one or both of ammonia and carbon dioxide from the animal waste,
- a predetermined level of bioavailability of nitrogen in the treated animal waste, and
- a predetermined level of bioavailability of phosphorus in the treated animal waste.

In an embodiment of any of the above embodiments, the method of treatment includes continuing to treat the animal waste once that animal waste has ceased to be in close proximity to the animals producing the animal waste. This is advantageous because although by the time the animal waste and the animals are moved apart the majority of the animal waste will have been treated sufficiently for it to require no further treatment, the most recently produced animal waste will not. As such, to allow treatment of the most recently produced animal waste the treatment will be continued for a period. In some examples that period can be up to 3 days.

In an embodiment of any of the above embodiments the method of treatment further comprises continuing to treat the animal waste in the shed in which the animals have been housed for up to one, two, three, or four days after the animals have been removed from the shed. This continued treatment has the effect that at the end of that period the animal waste is sufficiently dry and treated for it to be removed from the shed and immediately used for another purpose, for example to be spread on agricultural or horticultural land to act as a fertilizer, or for it to be placed in storage, for example bagged and stored in a dry location. This embodiment may, for example, be employed when the animals are poultry which are being raised for consumption, egg laying poultry in a flat deck system, or cattle that have been overwintering in a cattle shed.

In an embodiment of any of the above embodiments, when the animals are poultry and are being kept for egg laying purposes in a multi tier system, the animal waste that is carried out of the shed in which the poultry are laying eggs is the method of treatment further comprises periodically treating that removed animal waste with the treatment composition for up to one, two, three, or four days after the animal waste has been removed from the shed.

In some embodiments of the above embodiment, the animal waste falls off the or each conveyer belt into a container and the further treatment of the animal waste is performed in that container. Optionally that container is a closeable container which provides an enclosed environment which may be ventilated and from which the water vapour in the air leaving the container may be at least partially removed.

In other embodiments of the above embodiment, the animal waste is further treated by placing the animal waste on a surface in a covered environment and performing the treatment there. Optionally that surface is in an enclosed environment, for example inside a shed or building, which may be ventilated and from which the water vapour in the air leaving the enclosed environment may be at least partially removed.

In an embodiment of any of the above embodiments, the treatment performed by the method of treatment is one or more of dewatering the liquid animal waste, fixation of nitrogen in the liquid animal waste, solubilization of phosphorus in the liquid animal waste, and the reduction of pathogenic Bacteria in the liquid animal waste.

According to a second aspect of the present invention there is provided a treatment composition distribution system, in which the treatment composition distribution system comprises a supply of treatment composition, at least one supply line, and at least one nozzle, and the treatment composition is a liquid. The treatment composition distribution system is configured to distribute treatment composition from the treatment composition supply, through the supply line, and out of at least one nozzle on a periodic or continuous basis, and the treatment composition comprises a probiotic, and the probiotic comprises at least one non-pathogenic species of Bacteria.

In an embodiment of any of the above embodiments, when the animals producing animal waste to be treated are in or near to the location of production of that animal waste, the system further includes at least one source of drinking water for the animals, the drinking water including a drinking treatment composition, the drinking treatment composition comprises a probiotic, and the probiotic comprises at least one non-pathogenic species of Bacteria.

In an embodiment of any of the above embodiments, the treatment composition and the drinking treatment composition are the same.

In an embodiment of any of the above embodiments, the treatment composition and the drinking treatment composition have different formulations.

In an embodiment of any of the above embodiments, the at least one non-pathogenic species of Bacteria comprises at least one non-pathogenic species of the genus Bacillus.

In an embodiment of any of the above embodiments, the nozzle is so configured that the treatment composition exits the nozzle as a spray or a mist.

In an embodiment of any of the above embodiments, the one of the at least one spray or mist of the liquid treatment composition has an average droplet size of less than 1000 µm, less than 500 µm, or less than 300 µm.

In an embodiment of any of the above embodiments, the system is so configured that at least one spray or mist of treatment composition is introduced into the atmosphere at a height of between 0.02 m and 2.0 m above the surface on which the animals, for example poultry, are supported in the area substantially below the nozzle creating the spray or mist.

In an embodiment of any of the above embodiments, in locations which include a raised floor through which animal waste may fall, the system is so configured that at least one spray or mist of treatment composition is introduced into the atmosphere at a position vertically below the raised floor.

In an embodiment of any of the above embodiments, the system further comprises a control unit, and the control unit is configured to control the operation of the system.

In an embodiment of any of the above embodiments, the system further comprises at least one sensor, and each sensor is configured to detect at least one environmental characteristic at the position of the sensor.

In an embodiment of any of the above embodiments, the at least one environmental characteristic is one or more of atmospheric ammonia concentration, atmospheric carbon dioxide concentration, atmospheric methane concentration, humidity, and temperature. For example the at least one environmental characteristic is an atmospheric ammonia concentration of 25 ppm (parts per million).

In an embodiment of any of the above embodiments, the system further comprises a communications system, in which the communications system is in communication with each sensor, the communications system being configured to send a message to at least one destination, and the message relates to at least one environmental characteristic detected one or more sensors. In some embodiments the destination is a mobile telephone or a computer. A computer may be, but is not limited to, a desktop computer, a laptop computer, or a tablet computer.

In an embodiment of any of the above embodiments, each sensor is configured to send a message or signal to at least one destination, and the message or signal relates to at least one environmental characteristic detected by one or more of the sensors. In some embodiments the destination is a mobile telephone or a computer. A computer may be, but is not limited to, a desktop computer, a laptop computer, or a tablet computer.

In an embodiment of any of the above embodiments, the message may be sent by the short message service (SMS), email via an internet or intranet, or via a wireless network.

In an embodiment of any of the above embodiments, the message is sent to a user's user interface or destination, and the user can, on the basis of the message, decide whether to change any aspect of the method of treatment, for example to increase or decrease the quantity of treatment composition applied to the animal waste and / or to increase or decrease the period between each application of the treatment composition to the animal waste and change the operation of the distribution system using the control unit.

In an embodiment of any of the above embodiments, the system further comprises a controller, and the controller is configured to control the operation of the treatment composition distribution system. In some embodiments the operation controlled is one or more of turning the treatment composition distribution system on and off, the period over which the treatment composition distribution system is turned on, and which part of the treatment composition distribution system is turned off and on if the treatment composition distribution system is configured to have different operational states in different parts of the treatment composition distribution system. In an embodiment of any of the above embodiments, the period between each application of the treatment composition is up to 24 hours.

In an embodiment of any of the above embodiments, each period between application of the treatment composition to the animal waste is the same or approximately the same. In some embodiments the periods are one of 6 hours, 8 hours, 12 hours or 24 hours.

In an embodiment of any of the above embodiments, the length of the periods between application of the treatment composition to the animal waste are not all the same or approximately the same. In some embodiments the period between applications of treatment composition are shorter between 08:00 and 20:00 in the day that in the period between 20:00 and 08:00 the next day.

In an embodiment of any of the above embodiments, the controller is in communication with each sensor, and the control of the operation of the treatment composition distribution system is at least partially in response to the environmental characteristics detected by at least one sensor.

According to a third aspect of the present invention there is provided a method of operation of a poultry shed for use in the rearing of poultry for consumption or egg laying in a flat deck system, the method comprising providing a shed in which is fitted a treatment composition distribution system according to the second aspect of the present invention, introducing a plurality of poultry into the shed, treating the animal waste generated by the poultry according to the method of the first aspect of the present invention, removing the poultry from the shed when they have reached a desired size, and emptying the animal waste from the shed.

An advantage of this method is that, because the animal waste has been treated for the whole period of the occupancy of the shed by the poultry, the shed is at least substantially free of undesirable bacteria when the animal waste is removed from it. This has the result that there is no or minimal need for significant cleaning of the shed with cleaning or sterilizing chemicals before the next poultry are placed into the shed. This is in contrast to known methods of operation of poultry sheds for use in the rearing of poultry for consumption where cleaning of the shed involves significant quantities of chemicals for use in combating the build up of pathological Bacteria and other microorganisms during the occupancy of the shed by the previous poultry. Such known methods of cleaning require greater manpower and / or time that the cleaning in the method of operation of poultry shed for use in the rearing of poultry for consumption of the present invention.

In an embodiment of the above embodiment, the empty shed is treated with treatment composition before the poultry are introduced into the shed. This is advantageous because it both starts to combat any undesirable bacteria in the shed before the poultry are exposed to those Bacteria, and it has the result that as soon as the poultry start to produce animal waste the Bacteria of the treatment composition start to treat that animal waste. This minimizes pathological bacteria and the emission of undesirable gasses such as ammonia.

In an embodiment of any of the above embodiments, the treating of the animal waste generated by the poultry continues for up to one, two, three, or four days after the poultry have been removed from the shed.

According to a fourth aspect of the present invention there is provided a method of operation of a poultry shed for use in the production of eggs in a multi tier system, the method comprising providing a shed having a raised floor through which animal waste may fall, one or more conveyor belts beneath the raised floor configured to have the animal waste fall of the conveyor belts, and in which is fitted a treatment composition distribution system according to the second aspect of the present invention, introducing a plurality of poultry into the shed, treating the animal waste generated by the poultry according to the method of the first aspect of the present invention, and emptying the animal waste from the shed by activation of the conveyers on a periodic basis. The period of operation of the conveyor may be different, optionally longer, that the period in the method of treatment of the animal waste generated by the poultry.

In an embodiment of any of the above embodiments, the treatment composition distribution system is configured to treat areas of the shed that are not the conveyor belt or belts. This is advantageous because any animal waste that does not fall on the conveyors is also treated for the whole period of the occupancy of the shed by the poultry. This has the effect that the parts of the shed that are not the conveyor belt are at least substantially free of undesirable bacteria when poultry are removed from the shed. This has the result that there is no or minimal need for significant cleaning of the shed with cleaning or sterilizing chemicals before the next poultry are placed into the shed. This is in contrast to known methods of operation of poultry sheds for use in the rearing of poultry for egg production where cleaning of the shed involves significant quantities of chemicals for use in combating the build up of pathological Bacteria and other microorganisms during the occupancy of the shed by the previous poultry. Such known methods of cleaning require greater manpower and / or time that the cleaning in the method of operation of poultry shed for use in egg production of the present invention.

In an embodiment of the above embodiment, the empty shed is treated with treatment composition before the poultry are introduced into the shed. This is advantageous because it both starts to combat any undesirable bacteria in the shed before the poultry are exposed to those Bacteria, and it has the result that as soon as the poultry start to produce animal waste the Bacteria of the treatment composition start to treat that animal waste. This minimizes pathological bacteria and the emission of undesirable gasses such as ammonia.

In an embodiment of any of the above embodiments, the treating of the animal waste generated by the poultry continues for up to one, two, three, or four days after the animal waste that falls on the conveyor belts has been removed from the shed.

According to a fifth aspect of the present invention there is provided a method of manufacture of a solid fertilizer for use in increasing the fertility of a plant growth medium. That method comprises treating animal waste according to the method of the first or second aspect of the present invention.

According to a sixth aspect of the present invention there is provided a method of increasing the fertility of a plant growth medium. That method comprises treating liquid animal waste according to the method of the first or second aspect of the present invention and applying the treated animal waste to the plant growth medium.

In an embodiment of any of the above embodiments, the plant growth medium is soil.

According to a seventh aspect of the present invention there is provided a method of manufacture of biomass for the production of heat or electricity. That method comprises treating liquid animal waste according to the method of the first or second aspect of the present invention, and then burning the treated animal waste.

The method of the first, and third to seventh aspects of the present disclosure can include one or more, or all, of the features described above, as appropriate. The distribution system of the second aspect of the present disclosure can include one or more, or all, of the features or structures described above, as appropriate

The present invention will be further described and explained by way of example with reference to the accompanying drawings in which
Figure 1 shows a schematic view of an embodiment of a shed according to the present invention in which an embodiment of the method of the present invention is performed;
Figure 2 shows a detail of the shed of Figure 1; and
Figure 3 shows a schematic view of an embodiment of a second shed according to the present invention in which an embodiment of the method of the present invention is performed.

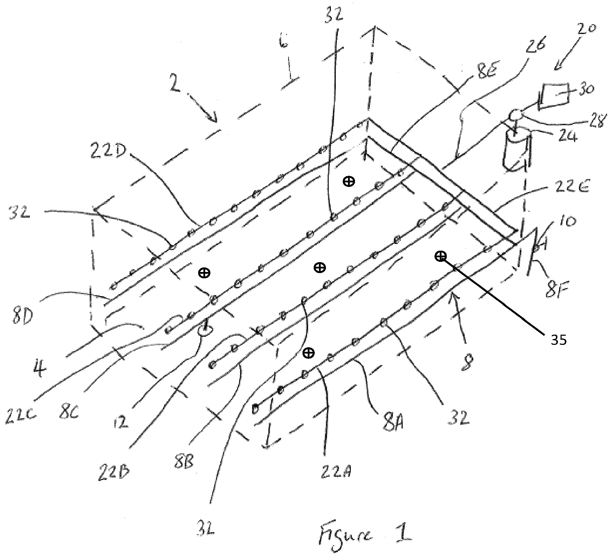

The aspects of the present invention are described hereafter with reference to Figures 1 to 3

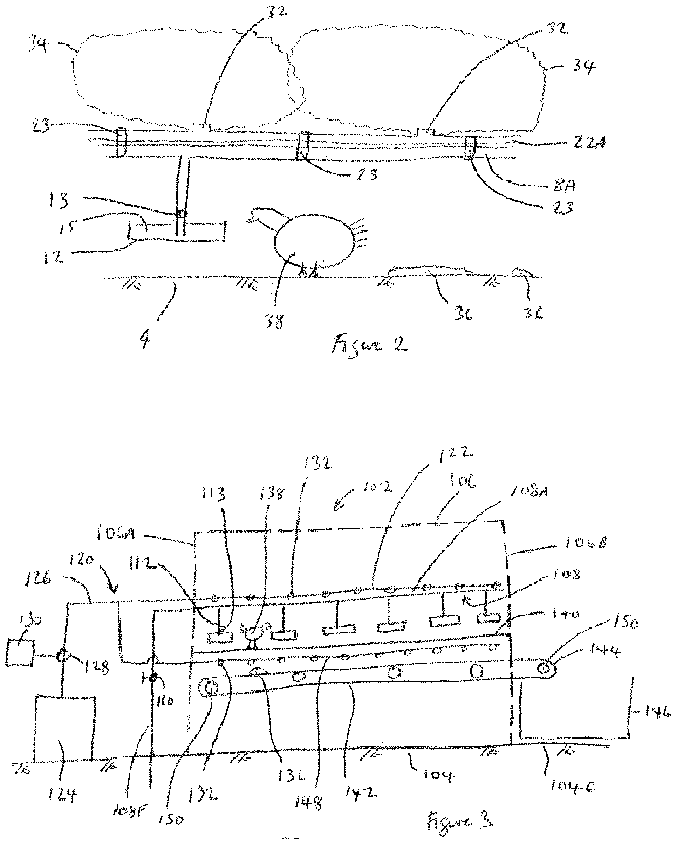

With reference to Figure 1 and 2, a poultry shed 2 suitable for the raising of poultry for consumption includes a floor 4, front, back and side walls and a roof generally indicated by dashed line 6. Within the poultry shed 2 and suspended above the floor 4 from the roof by appropriate suspension means (not shown) is a water supply system 8. The water supply system 8 is comprised of a plurality of water supply lines 8A to 8D which extend at least most of the way between a pair of opposite walls of the shed 2. The water supply lines 8A to 8D all extend from and are in liquid communication with a water distribution line 8E. The water distribution line 8E is in fluid communication with a water supply (not shown) via a water stand pipe 8F. Water stand pipe 8F includes a water control element, 10. In the illustrated embodiment the water control element 10 is a tap.

Depending from the water supply lines 8A to 8D are a plurality of water troughs 12 (for clarity purposes only one water trough 12 is illustrated). Each water trough 12 includes a flow control element 13 that both prevents the water trough 12 overfilling and from becoming empty of water 15.

Attached to the water supply lines 8A to 8D and water distribution line 8E is part of a treatment composition distribution system 20.

The treatment composition distribution system 20 includes treatment supply lines 22A to 22D which are attached to the water supply lines 8A to 8D respectively by a plurality of straps 23. The treatment supply lines 22A to 22D all extend from and are in liquid communication with a treatment distribution line 22E. The treatment distribution line 22E is attached to and supported by the water distribution line 8E.

The treatment distribution line 22E is in fluid communication with a treatment composition source 24 via a treatment supply line 26. The treatment supply line 26 includes a pump 28 which pressurizes treatment composition in the treatment composition distribution system when the pump is activated / turned on. The functioning of the pump 28 is controlled by a control unit 30.

The control unit 30 includes manual switches (not shown) that allow human control of the pump 30. Additionally or alternatively, the control unit 30 includes appropriate elements (not shown) to automate the activation and deactivation of the pump 30.

Each of the treatment supply lines 22A to 22D are in liquid communication with a plurality of nozzles 32 (for clarity, not all of nozzles 32 are labelled). Each of the nozzles 32 are configured to produce a spray or mist 34 of treatment composition when the pump 28 is activated and pumping the treatment composition into the treatment supply lines 22A to 22D and treatment distribution line 22E. The nozzles are orientated so as to apply the spray or mist of treatment composition to a predetermined area of the floor 4. The nozzles 32 are so configured that the spray or mist of the liquid treatment composition has an average droplet size of less than 1000 µm, less than 500 µm, or less than 300 µm.

In operation the control unit 30 periodically or continuously causes the pump 28 to activate and each nozzle to produce a spray or mist 32 of treatment composition. The spray or mist 32 of treatment composition will fall onto the floor 4 and any animal waste 36 that is on the floor 4. The spray or mist 34 is likely to fall on the poultry 38 also. This is, however, not harmful or contrary to the poultry's wellbeing because the Bacteria in the treatment composition are food grade and as such harmless to the poultry. Indeed, the treatment composition will help the poultry remain free or substantially free of pathogenic bacteria.

The treatment composition distribution system 20 also includes a number of sensors 35 (for clarity, only one sensor 35 is labelled. The sensors 35 measure one or more environmental characteristics such as the concentration of atmospheric ammonia, concentration of atmospheric carbon dioxide, the concentration of atmospheric methane, humidity, and temperature associated with that storage location.

The sensors 35 are configured to send the measured one or more environmental characteristics to a user interface device (not shown). The user interface device may be a smart phone, computer, computer tablet or other digital device that will display the measured one or more environmental characteristics to a user (not shown). The user may use that data to decide whether to cause any change to the treatment of the liquid animal waste or fibrous material via the control unit 30.

As time progresses the floor 4 becomes increasingly covered with animal waste 36. That animal waste 36 is, however, continually being treated by the treatment composition and as such, rather than the floor 4 becoming increasingly covered by an increasingly noxious layer of animal waste which includes high levels of pathogenic Bacteria and which is emitting high levels of ammonia, the floor is covered by a substantially dry layer of treated animal waste in which the nitrogen is largely in a stable non-ammonia form and which is free or substantially free of pathological bacteria.

When the poultry have reached a desired size they are removed from the shed 2. The periodic or constant treatment of the animal waste 36 on the floor 4 then continues until the most recently produced animal waste 36 has been treated by the treatment composition and that the recently produced animal waste meets a predetermined criteria. That predetermined criteria may be that the animal waste 36 has a dry solids content of one of at least 50% by weight (wt%), at least 60 wt%, at least 70 wt%, or at least 80 wt%; that the mass of a predetermined volume of animal waste is below a predetermined value; that there is a predetermined absolute level of emission of one or both of ammonia and carbon dioxide from the animal waste; that there is a predetermined level of bioavailability of nitrogen in the treated animal waste; or that there is a predetermined level of bioavailability of phosphorus in the treated animal waste.

Once the animal waste meets the predetermined criteria it is removed from the shed 2 and either immediately used for another purpose, for example fertilising agricultural land, or placed into storage.

With reference to Figure 3, a poultry shed 102 suitable for housing egg laying poultry includes a floor 104, front, back and side walls and a roof generally indicated by dashed line 106.

Within the poultry shed 102 is a raised floor 140 formed from a mesh material. The mesh material has a mesh size that is small enough that poultry 138 may walk around on the raised floor 140, and large enough that animal waste 136 may pass through the mesh of the raised floor 140 when that waste is produced by the poultry 138.

Below the raised floor 140 is a conveyor belt 142 which extends from close to a first wall 106A, trough opposite wall 106B and to a conveyor belt end 144. The conveyor belt 142 is so positioned that animal waste 136 falling trough the raised floor 140 lands on the conveyor belt 142. The conveyor belt 142 is also so positioned above the floor 104 and the ground level 104G surrounding the shed 102 that a container 146 may be located beneath the end 144 of the conveyor 142.

Suspended above the raised floor 140 from the roof of the shed 102 by appropriate suspension means (not shown) is a water supply system 108. The water supply system 108 includes a water supply line 108A which extends at least most of the way between a pair of opposite walls 106 A, 106B of the shed 102. The water supply line 108A extends from and is in liquid communication with a water supply (not shown) via a water stand pipe 108F. Water stand pipe 108F includes a water control element, 110. In the illustrated embodiment the water control element 110 is a tap.

Depending from the water supply line 108A is a plurality of water troughs 112 (for clarity purposes only one water trough 112 is labelled). Each water trough 112 includes a flow control element 113 that prevents both the water trough 112 overfilling and from becoming empty of water (not shown).

Attached to the water supply line 108A is part of a treatment composition distribution system 120.

The treatment composition distribution system 120 includes a treatment supply line 122 which is attached to the water supply line 108A by a plurality of straps (not shown). The treatment supply line 122 extends from and is in liquid communication with a treatment composition source 124 via a treatment supply line 126. The treatment supply line 126 includes a pump 128 which pressurises treatment composition in the treatment composition distribution system 120 when the pump 128 is activated / turned on. The functioning of the pump 128 is controlled by a control unit 130.

The control unit 130 includes manual switches (not shown) that allow human control of the pump 130. Additionally or alternatively, the control unit 130 includes appropriate elements (not shown) to automate the activation and deactivation of the pump 130.

The treatment composition distribution system 120 further includes a second treatment supply line 148. The second treatment supply line 148 extends from and is in liquid communication with the treatment composition source 124 via the treatment supply line 126. The second treatment supply line 148 extends along the vertically lower face of the raised floor 140 and is attached thereto by a number of straps (not shown).

Each of the treatment supply line 122 and second treatment supply line 148 is in liquid communication with a plurality of nozzles 132 (for clarity, not all of nozzles 132 are labelled) which are connected to and spaced along each supply line. Each of the nozzles 132 are configured to produce a spray or mist (not shown) of treatment composition when the pump 128 is activated and pumping the treatment composition into the treatment supply line 122 and second treatment supply line 148.

The nozzles 132 in liquid communication with the treatment supply line 122 are orientated so as to apply the spray or mist of treatment composition to a predetermined area of the raised floor 140. A proportion of that spray or mist will fall trough the raised floor 140 onto the uppermost surface of the conveyor belt 142.

The nozzles 132 in liquid communication with the second treatment supply line 148 are orientated so as to apply the spray or mist of treatment composition to the uppermost surface of the conveyor belt 142.

The nozzles 132 are so configured that the spray or mist of the liquid treatment composition has an average droplet size of less than 1000 µm, less than 500 µm, or less than 300 µm.

In operation the control unit 130 periodically or continuously causes the pump 128 to activate and each nozzle 132 produces a spray or mist of treatment composition. The spray or mist of treatment composition wall fall onto the raised floor 140 and / or the uppermost surface of the conveyor belt 142 and any animal waste 136 sitting on either of those surfaces. Some of that spray or mist is also likely to fall on the poultry 138. Again, this is, however, not harmful or contrary to the poultry's wellbeing because the Bacteria in the treatment composition are food grade and as such harmless to the poultry. Indeed, the treatment composition will help the poultry remain free or substantially free of pathogenic bacteria.

Periodically, in most embodiments with a period larger than the period between the activations of the pump 128, the conveyor belt 142 is activated and a motor (not shown) causes the conveyor belt 142 to travel around rollers 150 in a clockwise direction (as seen in Figure 3). The movement of the conveyor belt 142 has the result that animal waste 136 supported on the uppermost surface of the conveyor belt 142 will be carried to end 144 of the conveyor belt and then fall into the container 146.

The animal waste 136 supported on the conveyor belt 142 will, in some embodiments, have been on the conveyor belt 142 for a period sufficient for the treatment composition to have at least substantially fully treated some of the animal waste and to have at least substantially dewatered it. The most recently produced animal waste 136 will, depending on how recently it has been produced, be partially treated by the treatment composition. Overall, this has the effect that there is less strain on the conveyor belt and the motor driving it because the at least partially treated animal waste is lighter than the equivalent quantity of untreated animal waste.

A scraper bar (not shown) may be provided at the end 144 of the conveyor belt 142 if it is desired to ensure that there is little animal waste left attached to the conveyor belt 142 after it has passed around the roller 150 at the end 144.

The treatment of the animal waste 136 in the container 146 continues until the most recently produced animal waste 136 has been treated by the treatment composition and that animal waste meets a predetermined criteria. That predetermined criteria may be the animal waste 36 has a dry solids content of one of at least 50% by weight (wt%), at least 60 wt%, at least 70 wt%, or at least 80 wt%; that the mass of a predetermined volume of animal waste is below a predetermined value; that there is a predetermined absolute level of emission of one or both of ammonia and carbon dioxide from the animal waste; that there is a predetermined level of bioavailability of nitrogen in the treated animal waste; or that there is a predetermined level of bioavailability of phosphorus in the treated animal waste.

The above descriptions are meant to be exemplary only, and one skilled in the art will recognize that changes may be made to the embodiments described without departing from the scope of the disclosure. Still other modifications which fall within the scope of the present disclosure will be apparent to those skilled in the art, in light of a review of this disclosure.

Various aspects of the method and apparatus disclosed in the various embodiments may be used alone, in combination, or in a variety of arrangements not specifically discussed in the embodiments described above. This disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from this invention in its broader aspects. The scope of the following claims should not be limited by the embodiments set forth in the examples, but should be given the broadest reasonable interpretation consistent with the description as a whole.

Statements of invention:
1 A method of treatment of animal waste, in which the method comprises periodically or continuously applying a treatment composition to the animal waste in the location that the animal waste is produced, in which the treatment composition comprises a probiotic, and the probiotic comprises at least one non-pathogenic species of Bacteria.
2 A method according to statement 1 in which at least 50%, at least 60%, at least 70%, at least 80%, at least 90%, or 100% of the at least one non-pathogenic species of Bacteria are in the form of spores.
3 A method according to statement 1 or 2 in which the method is performed whilst the animals producing the animal waste are in or near to the location of production of that animal waste, the method further comprises provision of at least one source of drinking water for the animals, introducing a drinking treatment composition into the drinking water for the animals, and the drinking treatment composition comprises a probiotic, and the probiotic comprises at least one non-pathogenic species of Bacteria.
4 A method according to statement 3 in which the treatment composition and the drinking treatment composition are the same.
5 A method according to statement 3 in which the treatment composition and the drinking treatment composition have different formulations.
6 A method according to any of statements 1 to 5 in which the at least one non-pathogenic species of Bacteria of one or both of the treatment composition and the drinking treatment composition comprises at least one non-pathogenic species of the genus Bacillus.
7 A method according to any of statements 1 to 6 in which the probiotic component of one or both of the treatment composition and the drinking treatment composition comprises one or more of at least one non-pathogenic species of the genus Bacillus, Lactic Acid Bacteria, soil Bacteria, water Bacteria, human microbiome Bacteria and plant Bacteria and / or the spores of one or more of at least one non-pathogenic species of the genus Bacillus, Lactic Acid Bacteria, soil Bacteria, water Bacteria, human microbiome Bacteria and plant Bacteria.
8 A method according to any of statements 1 to 7 in which the probiotic component of one or both of the treatment composition and the drinking treatment composition comprises at least one non-pathogenic species of the genus Bacillus and one or more of Lactobacillus, Lactococcus, Bifidobacterium, Azospirillum, Enterobacter, Klebsiella, Pseudomonas, Sphingomonas, Nitrospira, Pedomicrobium, Mycobacterium, Nocardia, Desulfovibrio and Sulfuricurvum.
9 A method according to any of statements 6 to 8 in which the at least one non-pathogenic species of the genus Bacillus comprises one or more of Bacillus subtilis, Bacillus licheniformis, Bacillus megaterium, Bacillus amyloliquefaciens and Bacillus pumilus.
10 A method according to any of statements 1 to 9 in which treatment composition and the drinking treatment composition further comprises a prebiotic component, and the prebiotic component comprises one or more prebiotic compositions.
11 A method according to statement 10 in which the prebiotic component comprises one or more of a fructo-oligosaccharide, a galacto-oligosaccharide and inulin.
12 A method according to any of statements 1 to 11 in which the treatment composition is a liquid.
13 A method according to statement 12 in which the treatment composition is formed into at least one spray or mist for application to the animal waste.
14 A method according to statement 13 in which at least one of the at least one spray or mist of the liquid treatment composition has an average droplet size of less than 1000 µm, less than 500 µm, or less than 300 µm.
15 A method according to statement 13 or 14 in which at least one spray or mist of treatment composition is introduced into the atmosphere at a height of between 0.02 m and 2.0 m.
16 A method according to any of statements 13 to 15 for use in locations which include a raised floor through which animal waste may fall, in which at least one spray or mist of treatment composition is introduced into the atmosphere at a position vertically below the raised floor.
17 A method according to any of statements 1 to 16 in which the method comprises periodically applying a treatment composition to the animal waste, and the period between each application of the treatment composition is up to 24 hours.
18 A method according to any of statements 1 to 17 in which the treatment of the animal waste results in the generation of water vapour, and the method further comprises capturing at least a part of that water vapour.
19 A method according to any of statements 1 to 18 in which the animal waste is generated by one of one or more birds, one or more cattle, one or more sheep, one or more horses or ponies, one or more animals kept in a zoo, one or more domestic pets, or one or more rabbits
20 A method according to any of statements 1 to 19 in which the treatment is concluded when the treated animal waste meets a predetermined criteria.
21 A method according to statement 20 in which the predetermined criteria is one or more of
   the animal waste has a dry solids content of one of at least 50% by weight (wt%), at least 60 wt%, at least 70 wt%, or at least 80 wt%,
   the mass of a predetermined volume of animal waste is below a predetermined value,
   a predetermined absolute level of emission of one or both of ammonia and carbon dioxide from the animal waste,
   a predetermined level of bioavailability of nitrogen in the treated animal waste, and a predetermined level of bioavailability of phosphorus in the treated animal waste.
22 A method according to any of statements 1 to 21 in which the treatment is one or more of dewatering the animal waste, fixation of nitrogen in the animal waste, solubilization of phosphorus in the treated waste, and the reduction of pathogenic Bacteria in the animal waste.
23 A method of manufacture of a solid fertilizer for use in increasing the fertility of a plant growth medium, the method comprising treating animal waste according to the method of any of statements 1 to 21.
24 A method of increasing the fertility of a plant growth medium comprising treating animal waste according to the method of any of statements 1 to 21, and applying the treated animal waste to the plant growth medium.
25 A method of manufacture of biomass for the production of heat or electricity comprising treating animal waste according to the method of any of statements 1 to 21, and then burning the treated animal waste.
26 A method of manufacture of animal bedding comprising treating animal waste according to the method of any of statements 1 to 21
27 A treatment composition distribution system, in which the treatment composition distribution system comprises a supply of treatment composition, at least one supply line, and at least one nozzle,
   the treatment composition is a liquid,
   the treatment composition distribution system is configured to distribute treatment composition from the treatment composition supply, through the supply line, and out of at least one nozzle on a periodic or continuous basis, and
   the treatment composition comprises a probiotic, and the probiotic comprises at least one non-pathogenic species of Bacteria.
28 A system according to statement 27 for use when the animals producing animal waste to be treated are in or near to the location of production of that animal waste, the system further comprising at least one source of drinking water for the animals, the drinking water comprising a drinking treatment composition, and the drinking treatment composition comprises a probiotic, and the probiotic comprises at least one non-pathogenic species of Bacteria.
29 A system according to statement 28 in which the treatment composition and the drinking treatment composition are the same.
30 A method according to statement 28 in which the treatment composition and the drinking treatment composition have different formulations.
31 A system according to any of statements 27 to 30 in which the at least one non-pathogenic species of Bacteria of one or both of the treatment composition and the drinking treatment composition comprises at least one non-pathogenic species of the genus Bacillus.
32 A system according to any of statements 27 to 31 in which the nozzle is so configured that the treatment composition exits the nozzle as a spray or a mist.
33 A system according to statement 32 in which the one of the at least one spray or mist of the liquid treatment composition has an average droplet size of less than 1000 µm, less than 500 µm, or less than 300 µm.
34 A system according to statement 32 or 33 in which the system is so configured that at least one spray or mist of treatment composition is introduced into the atmosphere at a height of between 0.02 m and 2.0 m above the surface on which the poultry are supported in the area substantially below the nozzle creating the spray or mist.
35 A system according to any of statements 32 to 34 for use in locations which include a raised floor through which animal waste may fall, in which the system is so configured that at least one spray or mist of treatment composition is introduced into the atmosphere at a position vertically below the raised floor.
36 A system according to any of statements 27 to 35 in which the system further comprises at least one sensor, and each sensor is configured to detect at least one environmental characteristic at the position of the sensor.
37 A system according to statement 36 in which the at least one environmental characteristic is one or more of atmospheric ammonia concentration, atmospheric carbon dioxide concentration, atmospheric methane concentration, humidity, and temperature.
38 A system according to statement 36 or 37 in which each sensor is configured to send a signal or message relating to the detected at least one environmental characteristic to a user interface, and optionally the user interface is a mobile telephone or a computer.
39 A system according to any of statements 27 to 38 in which the system further comprises a control unit, and the control unit is configured to control the operation of the system.
40 A structure suitable for the housing of poultry comprising a treatment composition distribution system according to any of statements 27 to 39, in which the structure is an enclosed structure, and optionally the enclosed structure is a building.
41 A structure according to statement 40 in which the structure further comprises a ventilation system suitable for use in enclosed spaces, in which the ventilation system comprises an air extraction system.
42 A structure according to statement 41 in which the air extraction system is configured to dehumidify the air extracted from the structure.
43 A structure according to any of statements 40 to 42 further comprising a water distribution system, in which the water distribution system comprises at least one water supply pipe, and at least one water supply pipe supports at least one supply line for the treatment composition.
44 A structure according to statement 43 in which a plurality of nozzles are in communication with the at least one treatment composition supply line supported by the at least one water supply pipe.
45 A method of operation of a poultry shed for use in the rearing of poultry for consumption, the method comprising providing a shed in which is fitted a treatment composition distribution system according to any of statements 27 to 39, introducing a plurality of poultry into the shed, treating the animal waste generated by the poultry according to the method of any of statements 1 to 26, removing the poultry from the shed when they have reached a desired size, and emptying the animal waste from the shed.
46 A method according to statement 45 in which the empty shed is treated with treatment composition before the poultry are introduced into the shed.
47 A method according to statement 46 in which the treating of the animal waste generated by the poultry continues for up to one, two, three, or four days after the poultry have been removed from the shed.
48 A method of operation of a poultry shed for use in the production of eggs, the method comprising providing a shed having a raised floor through which animal waste may fall, one or more conveyor belts beneath the raised floor configured to have the animal waste fall of the conveyor belts, and in which is fitted a treatment composition distribution system according to any of statements 27 to 39, introducing a plurality of poultry into the shed, treating the animal waste generated by the poultry according to the method according to any of statements 1 to 26, and emptying the animal waste from the shed by activation of the conveyers on a periodic basis.
49 A method according to statement 48 in which the treatment composition distribution system is configured to treat at least the surface of the conveyor belts and areas of the shed that are not the conveyor belt or belts.
50 A method according to statement 48 or 49 in which the empty shed is treated with treatment composition before the poultry are introduced into the shed.
51 A method according to any of statements 48 to 50 in which the treating of the animal waste generated by the poultry continues for up to one, two, three, or four days after the animal waste that falls on the conveyor belts has been removed from the shed.

## Claims

1. A method of treatment of animal waste, in which the method comprises periodically or continuously applying a treatment composition to the animal waste in the location that the animal waste is produced, in which the treatment composition comprises a probiotic, and the probiotic comprises at least one non-pathogenic species of Bacteria.

2. A method according to claim 1 in which at least 50%, at least 60%, at least 70%, at least 80%, at least 90%, or 100% of the at least one non-pathogenic species of Bacteria are in the form of spores.

3. A method according to claim 1 or 2 in which the method is performed whilst the animals producing the animal waste are in or near to the location of production of that animal waste, the method further comprises provision of at least one source of drinking water for the animals, introducing a drinking treatment composition into the drinking water for the animals, and the drinking treatment composition comprises a probiotic, and the probiotic comprises at least one non-pathogenic species of Bacteria.

4. A method according to any of claims 1 to 3 in which the at least one non-pathogenic species of Bacteria of one or both of the treatment composition and the drinking treatment composition comprises at least one non-pathogenic species of the genus Bacillus.

5. A method according to any of claims 1 to 4 in which the probiotic component of one or both of the treatment composition and the drinking treatment composition comprises one or more of at least one non-pathogenic species of the genus Bacillus, Lactic Acid Bacteria, soil Bacteria, water Bacteria, human microbiome Bacteria and plant Bacteria and / or the spores of one or more of at least one non-pathogenic species of the genus Bacillus, Lactic Acid Bacteria, soil Bacteria, water Bacteria, human microbiome Bacteria and plant Bacteria.

6. A method according to any of claims 1 to 5 in which the probiotic component of one or both of the treatment composition and the drinking treatment composition comprises at least one non-pathogenic species of the genus Bacillus and one or more of Lactobacillus, Lactococcus, Bifidobacterium, Azospirillum, Enterobacter, Klebsiella, Pseudomonas, Sphingomonas, Nitrospira, Pedomicrobium, Mycobacterium, Nocardia, Desulfovibrio and Sulfuricurvum.

7. A method according to any of claims 4 to 6 in which the at least one non-pathogenic species of the genus Bacillus comprises one or more of Bacillus subtilis, Bacillus licheniformis, Bacillus megaterium, Bacillus amyloliquefaciens and Bacillus pumilus.

8. A method according to any of claims 1 to 7 in which treatment composition and the drinking treatment composition further comprises a prebiotic component, and the prebiotic component comprises one or more prebiotic compositions.

9. A method according to claim 8 in which the prebiotic component comprises one or more of a fructo-oligosaccharide, a galacto-oligosaccharide and inulin.

10. A method according to any of claims 1 to 9 in which the treatment composition is a liquid.

11. A method according to any of claims 1 to 10 in which the treatment is concluded when the treated animal waste meets a predetermined criteria, in which the predetermined criteria is one or more of
the animal waste has a dry solids content of one of at least 50% by weight (wt%), at least 60 wt%, at least 70 wt%, or at least 80 wt%,
the mass of a predetermined volume of animal waste is below a predetermined value,
a predetermined absolute level of emission of one or both of ammonia and carbon dioxide from the animal waste,
a predetermined level of bioavailability of nitrogen in the treated animal waste, and
a predetermined level of bioavailability of phosphorus in the treated animal waste.

12. A method according to any of claims 1 to 11 in which the treatment is one or more of dewatering the animal waste, fixation of nitrogen in the animal waste, solubilization of phosphorus in the treated waste, and the reduction of pathogenic Bacteria in the animal waste.

13. A method of manufacture of a solid fertilizer for use in increasing the fertility of a plant growth medium, the method comprising treating animal waste according to the method of any of claims 1 to 12.

14. A method of manufacture of biomass for the production of heat or electricity comprising treating animal waste according to the method of any of claims 1 to 12, and then burning the treated animal waste.

15. A method of manufacture of animal bedding comprising treating animal waste according to the method of any of claims 1 to 12.
